# EUROPEAN PATENT SPECIFICATION

(11) **EP 4 121 344 B1**
(45) Date of publication and mention of the grant of the patent: **19.02.2025**
(21) Application number: 21717522.3
(22) Date of filing: 15.03.2021
(51) Int. Cl.: B62M 6/50, B62J 45/411, B62J 45/412

(54) **PEDAL ASSIST SYSTEM FOR ELECTRIC BICYCLE AND BICYCLE THEREOF**
PEDALUNTERSTÜTZUNGSSYSTEM FÜR EIN ELEKTRISCHES FAHRRAD UND FAHRRAD DAFÜR
SYSTÈME D'ASSISTANCE DE PÉDALE POUR BICYCLETTE ÉLECTRIQUE ET BICYCLETTE ASSOCIÉE

(30) Priority: 16.03.2020 IT 202000005530
(43) Date of publication of application: 25.01.2023
(73) Proprietor: Costa, Michela, 80122 Napoli (IT)
(72) Inventor: Costa, Michela, 80122 Napoli (IT)
(74) Representative: Di Bernardo, Antonio
(86) International application number: PCT/IB2021/052116
(87) International publication number: WO 2021/186315

(56) References cited:
- CN-A- 111 572 699
- US-A- 5 922 035
- US-A1- 2003 159 870
- US-A1- 2015 019 062
- US-A1- 2016 361 213
- US-A1- 2019 300 105
- US-A1- 2020 012 964
- US-B1- 6 446 745
- US-B2- 10 376 731
- US-B2- 9 902 252

## Description

### TECHNICAL FIELD

The present invention relates to the sector of electric bicycles and pedal assist systems for the latter.

### BACKGROUND

Nowadays, electric bicycles (or e-bikes) are increasingly common, as they enable mobility also along long distances with a contained effort and without gas emissions into the atmosphere.

Unlike conventional bicycles (so-called muscle bikes), e-bikes are provided with an electric motor placed in the hub of a wheel (front or rear) or integrated into the central wheel with which the crank arms are integral (so-called central motor).

Modern e-bikes are provided with a lithium-ion battery which can be charged on the bike itself or removed and charged elsewhere. The battery is the storage system of the electrical energy necessary for the activation of the motor which provides extra torque to the drive wheel, in addition to that exercised by the biker through the pedals.

In some electric bicycles that use motors with a housing in the wheel hub, the electric power provided by the motor is limited according to a signal that comes from a lever placed on the handlebar which is activated by the biker, and controlled according to a speed signal that operates with an on/off logic: after the first degrees of rotation of the crank arm, for speeds other than zero, the motor is activated. In these solutions, it is possible to modulate the motor power supply continuously. There are three or four power values that can be supplied, which are selected based on the position of the lever present on the handlebar. However,

in these solutions, an increased motor power level is perceived as a jerk by the biker. Also, the energy stored in the battery is not optimal.

Some e-bikes with a central motor envisage more advanced solutions which enable a more gradual power supply. The biker acts on a lever placed on the handlebar to which an electric motor power value corresponds, a control unit detects a torque value to the pedals and acts on the motor only upon a sufficient thrust by the biker. The power is supplied with a gradual logic until reaching the threshold value selected with the manual lever. The rideability of the bicycle is more natural as the biker does not perceive any jerks but it is not adaptable to the specific use context.

In both cases described, the biker does not have the sensation of full control of the vehicle and on steep or uneven ground unsafe riding conditions can occur.

US 2003/159870 A1 discloses the features of the preamble of claim 1.

US patent US 6,446,745 describes a control system for electric vehicles, also such as electric bicycles, which envisages different operating modes, including a cruise control which enables a speed set by the user to be maintained.

Patent application US20190389535 describes a method for regulating a pedal assist system in which a controller of the vehicle receives data from the torque sensor indicative of the torque generated by the user of the vehicle and consequently modifies the torque generated by the motor. By way of example, a motor control algorithm in a pedal assist system for electric bicycles is presented, which uses one among multiple filtering strategies for calculating in real time the torque generated by the biker which is used for the closed loop modulation of the motor torque. The filtering strategy implemented can be selected based on the conditions of torque increase/decrease generated by the biker, the pedalling frequency, the level of electric assistance selected by the user and/or the reduction in current to the motor. The motor control algorithm filters the biker's input torque for stabilizing the motor output torque in pedal assist mode.

Despite the numerous pedal assist solutions available on the market, there is a perceived need for solutions which, while keeping the bicycle costs contained, enable a pedal assistance which adapts to the biker's needs and to the specific context of use and reduces energy consumptions in order to guarantee greater operating autonomy and a prolonged useful life of the electric components.

Electric bicycles are also known from US2003/159870 and US9902252.

### OBJECTS AND SUMMARY OF THE INVENTION

It is an object of the present invention is to overcome the drawbacks of the prior art.

In particular, it is an object of the present invention to present an electric bicycle provided with a pedal assist system that adapts itself to the different conditions of use of the bicycle and/or the biker's indications.

A further object of the present invention is that of improving the control of the energy flows between the electric storage system and the motor for greater operating autonomy and a prolonged lifetime of the components.

These and other objects of the present invention are achieved by a system incorporating the features of the annexed claims, which form an integral part of the present description.

According to a first aspect, the present invention is directed to an electric bicycle comprising an electric motor connected to a wheel of the bicycle and supplied by a battery. The bicycle further comprises a plurality of sensors adapted to detect operating parameters of the bicycle, such as the speed or torque applied to the crank arm, and a user control system adapted to enable a biker to provide information necessary for controlling the electric motor. A control unit is operatively connected to the electric motor, to the plurality of sensors and to the user control system for controlling the electric power of the electric motor in response to signals received from at least one sensor of said plurality of sensors and from the user control system. The control unit comprises a memory unit wherein a plurality of control logics for controlling the motor are stored, and is configured to assign a weight to each of said control logics as a function of the data received from the sensors and/or from the user control system. The control unit updates the weights of the control logics based on updated data received from the sensors and/or the user control system, and dynamically selects the control logic with a greater weight. The control unit therefore controls the electric motor according to the selected logic. The control unit assigns the weights to said plurality of control logics according to a fuzzy logic.

Such solution enables efficient management of the bicycle to be obtained thanks to a control unit that dynamically selects the control mode that is most suitable for the use conditions of the bicycle and the demands of the biker that uses it. Thanks to the dynamic selection of the control logics, the consumption of electrical energy stored in the battery is also reduced and the battery itself is protected, preventing it from dispensing any peaks of current that would damage it.

According to a further aspect, the invention is intended for a pedal assist system in which a control unit comprises a memory unit wherein a plurality of control logics for controlling the electric motor are stored, and is configured to assign a weight to each of said control logics according to data received from the sensors and/or from the user control system indicated above. The control unit updates the weights of the control logics based on updated data received from the sensors and/or the user control system, and dynamically selects the control logic with a greater weight. The control unit therefore controls the electric motor according to the selected logic.

Further features and advantages of the present invention will be more apparent from the description of the accompanying drawings.

### BRIEF DESCRIPTION OF THE DRAWINGS

The invention will be described below with reference to some examples, provided by way of non-limiting example, and illustrated in the annexed drawings. These drawings illustrate different aspects and embodiments of the present invention and, where appropriate, reference numbers illustrating similar structures, components, materials and/or elements in different figures are indicated by similar reference numbers.
Figure 1 illustrates an electric bicycle according to the invention;
Figure 2 schematically illustrates the control system of the motor of the bicycle of figure 1;
Figure 3 is a flow diagram of a control logic applied for the control of the bicycle of figure 1.

### DETAILED DESCRIPTION OF THE INVENTION

While the invention is subject to various modifications and alternative constructions, some preferred embodiments are shown in the drawings and shall be described hereinbelow in detail. It is to be understood, however, that there is no intention to limit the invention to the specific embodiment illustrated but, on the contrary, the invention intends to cover all the modifications, alternative constructions, and equivalents that fall within the scope of the invention as defined in the claims.

The use of "for example", "etc.", "or" indicates non-exclusive alternatives without limitation unless otherwise indicated. The use of "includes" means "includes, but not limited to" unless otherwise indicated.

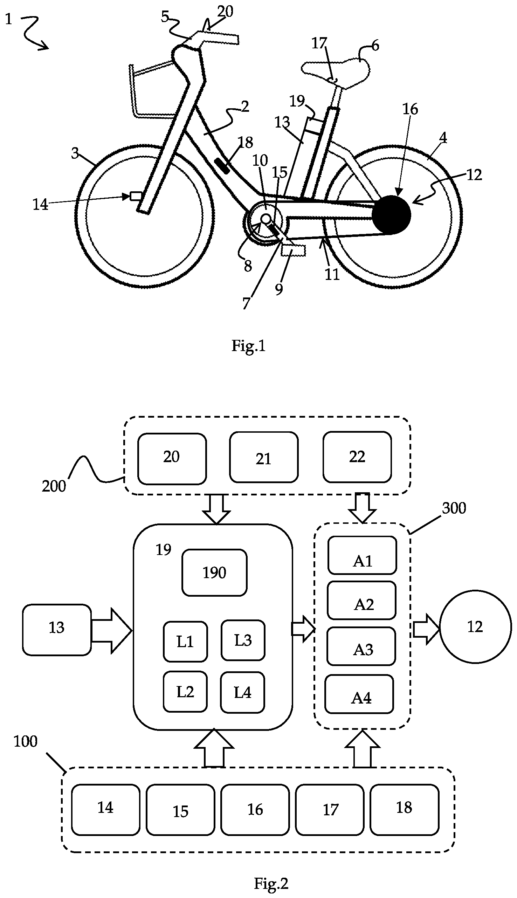

Figure 1 illustrates an electric bicycle 1 according to the present invention.

The electric bicycle 1 comprises a chassis 2 on which two wheels (a front one 3 and a rear one 4) are mounted. The front wheel 3 is a driven wheel which can be steered thanks to a handlebar 5, whereas the rear wheel 4 is a drive wheel.

The electric bicycle 1 comprises a saddle 6 on which the biker can sit for activating a conventional movement system comprising a pair of crank arms 7, mounted at the two ends of a shaft 8, and each bearing a pedal 9. The crank arms 7 are associated with a toothed wheel 10 on which a chain 11 is mounted which transfers the motion of the crank arms to the rear drive wheel 4.

The electric bicycle 1 then comprises an electric movement system comprising an electric motor 12 which provides an additional driving torque with respect to that determined by the biker through pedalling. In the example described herein the electric motor 12 is integrated into the hub of the rear wheel 4. In some configurations the electric motor can also act as an electric generator. However, other embodiments are possible which envisage an electric motor both in the front wheel and in the rear one, or even electric bicycle configurations with three wheels, e.g. a front one and two rear ones or two front ones and one rear one and any wheel motors on each of the wheels placed on the same axis. Again, in other embodiments, the electric motor may be of the "central" type able to supply a driving torque direction to the crank arms. Again, to reduce energy consumptions, the electric motor may operate only as a motor and not as a generator.

The electric motor 12 is supplied by an electric storage system 13. Preferably, the storage system is of the chargeable type, e.g. it is a lithium-ion battery, and its charging and discharging is managed by a battery management system (BMS).

The electric bicycle 1 then comprises a plurality of sensors. In the example described herein the bicycle is provided with a speed sensor able to detect the speed of the bicycle; the speed sensor may be a magnetic speedometer 14 mounted here in proximity to the front wheel 3, or it may be another type of speedometer or exploit GPS technology for measuring the speed of the bicycle.

The bicycle then comprises torque sensors, in particular in the example described herein a torque meter 15, mounted at a crank arm 7 for measuring the torque generated by the biker, and a torque meter 16 for measuring the torque supplied by the electric motor 12. In the example described herein the bicycle is also provided with a weight sensor 17 adapted to measure the weight of the biker, e.g. the sensor 17 can be made with load cells with a housing in the seat 6. The bicycle 1 is then provided with slope sensors 18 able to detect the inclination of the bicycle with respect to the horizontal.

The electrical bicycle 1 then comprises a control unit 19 which, as shown in figure 2, is operatively connected to the battery 13 (in particular to the BMS), to the electric motor 12, to the on-board sensors (indicated overall with reference 100 in figure 2) and to the user control system 200 which will be described in more detail below.

The user control system 200 includes the means through which the biker can provide necessary information for controlling the electric motor 12. Such system includes for example a control lever 20 positioned on the handlebar 5, through which the user can select a riding mode - e.g. sport, mountain, city - or a motor power level or set a cruise control function, e.g. by activating it at the current speed or setting a speed value to be maintained. Again, the user control system 200 can comprise a touch screen 21 or a wireless device 22, such as a smart phone, through which the user can enter the data for controlling the bicycle.

The control unit 19 receives input signals coming from the on-board sensors 100 and from the user control system 200 and sends the output signals to the actuators (indicated overall with reference 300) that control the power supplied to the electric motor 12. In the example described herein a plurality of actuators (A1, A2, A3) are shown, which may be of various types, e.g. on/off switches and PID (proportional-integral-derivative) controllers, however according to other embodiments it is possible to provide a single actuator able to operate according to different logics selected from the control unit 19.

The control unit 19 comprises a memory area, e.g. a RAM or a ROM or an EEPROM, in which software programs are stored (indicated in figure 2 with L1, L2, L3 and L4) which implement different control logics for controlling the electric motor. The control unit automatically and dynamically selects one of the control logics and therefore controls the actuators 300 so that the electric motor 12 generates the necessary driving torque to reach the objective that the selected control logic sets.

In detail, the control unit 19 comprises a processing unit 190, e.g. a microprocessor, configured to assign a weight to each of the control logics L1, L2, L3, and L4 according to the data received from the sensors 100 and/or from the user control system 200 and/or from the battery.

Periodically, or as the updated data arrive from the sensors 100 and from the user control system 200, the control unit updates the weights of the control logics, and dynamically selects the control logic with the highest weight.

In the example of figure 1 and 2, the control unit comprises four control logics L1, L2, L3 and L4 and which are described herein below.

The logic L1 is a cruise control that sets out to maintain the bicycle speed coinciding with a target value set. Such type of control is actuated based on the instantaneous speed sensor 14 only. The target speed, V_{T}, can be set manually by the biker, e.g. through the touch screen 21, or it can be determined by the control unit by processing the data of a path provided by a specific digital application with recognition of the paths (e.g. Google Maps or Apple Maps) run on a device 22 connected to the electric bicycle 1.

If the control unit 19 selects the logic L1, then it activates the actuator A1 which comprises a PID controller which receives as an input the target speed value V_{T} and the instantaneous speed value from the speed sensor 14. In the event in which the instantaneous speed of the e-bike, measured by the speed sensor 14, is not the same as the target one, the PID controller acts on the motor by increasing or reducing the support torque Cs generated by the latter. The pedal support torque, Cs, together with that of the biker Cc, determine a speed variation and therefore a re-alignment with respect to the target value. As the dynamics of the e-bike are also influenced by the resistance to aerodynamic motion and the rolling friction of the wheels, the control is instantaneous and the modification of the electric motor torque is in practice performed continuously (modulation control). Preferably, the logic L1 envisages a maximum limit to the acceptable target speed, e.g. the speed V_{T} set must not exceed Vmax=25 km/h. Therefore, by acting on the speed of the electric bicycle, the control logic does not require a limiter. This type of control can be used in any context, but it is particularly advantageous in situations in which braking and restarting are not frequent, therefore in contexts in which there is no traffic, such as areas outside the city.

The logic L2 is a proportional type pedal assist, the objective of which is to control the motor in order to provide a driving torque proportional to the torque imparted by the biker on the crank arm.

If the control unit 19 selects the logic L2, it activates the actuator A2, which comprises a proportional controller, which receives as an input the pedal torque value Cc measured by the torque sensor 15 and generates as an output a control for the electric motor 12 such that the torque Cs generated by the latter is proportional to that of the biker. For example, if the proportionality ratio is Cs/Cc = 1.2, if the biker generates a torque Cc=1Nm, the actuator A2 controls the motor so that it generates a torque Cs of 1.2 Nm. Preferably, the actuator A2 also comprises a speed limiter that intervenes by switching off the motor when the bicycle proceeds at a speed greater than a maximum speed value. This type of logic is adapted to support pedalling in urban contexts, reducing the effort of the biker.

The logic L3 is a logic that has the priority objective of optimising the use of the battery. If this control logic is the one selected, then the control unit estimates the necessary energy consumption for reaching the destination indicated by the user on the basis of the weight measured by the weight sensor 17 and/or the path data received from the user control unit 200 (e.g. from applications run on a smart phone connected to the bicycle) and/or from the slope sensor 18. The control unit 19 also controls the state of charge of the battery 13 for determining a quantity of residual electric energy stored in the battery, therefore it determines an energy value to be used during the path and dynamically controls the electric motor - through the actuator A3 - so as to provide a torque during the path such as to consume the calculated energy value to be used.

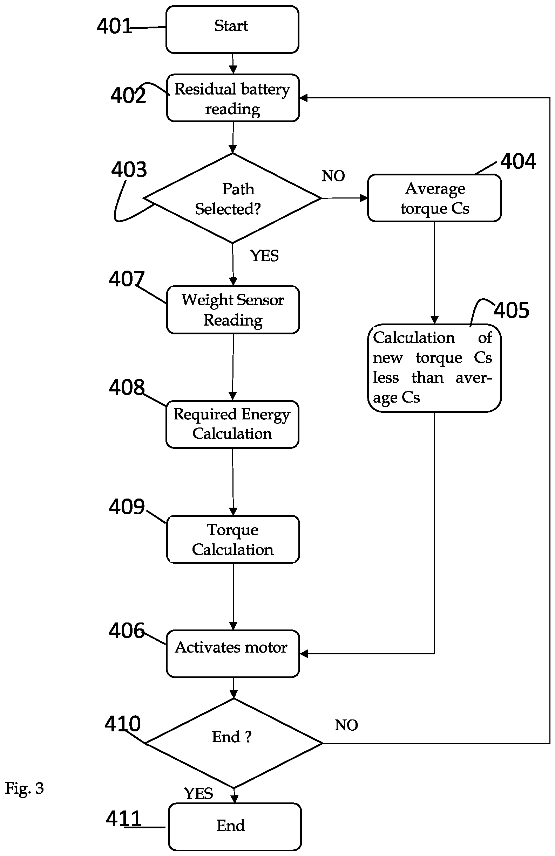

With reference to figure 3, the flow diagram of the logic L3 is illustrated. After the start (step 401) the control unit 19 proceeds to read the state of residual charge in the battery (step 402), then it checks (step 403) if a path has been selected - e.g. for going from home to work. In the negative case, a value is acquired (step 404) of the average torque Cs_{average} provided by the motor from when it is switched on to the time of measurement and a driving torque value is calculated (step 405) Cs_{new} of the motor which is lower than the average value Cs_{average} acquired in step 404. The calculation of the new support torque value Cs may be a value reduced by a predetermined value, e.g. 10% lower, or be calculated with finer logics, e.g. proportional to the slope value measured by the sensor 18, with Cs_{new}=Cs_{average}*p, where p indicates the uphill slope percentage. Subsequently, the motor is controlled (step 406) to supply the torque Cs_{new}.

If, instead, a path has been selected, e.g. in the absence of a slope, then the control unit reads (step 407) the speed data measured by the speed sensor 14 and the weight data measured by the weight sensor 17 and calculates (step 408) the necessary energy for reaching the destination set by the biker through the user control system, energy that corresponds to the work of the drive force on the distance to be travelled. The drive force is determined based on the second law of motion therefore the sum of the forces acting on the bicycle 1 equals the product of the total mass of the bicycle 1 and of the biker (the latter determined based on the measurement of the sensor 17) for the speed variation over time. Such forces have a positive sign if they determine an acceleration and a negative sign if they are instead resistant and determine a deceleration. Therefore the drive force is positive and comes from the sum of the pedal support torque and the torque exerted by the biker divided by the radius of the wheel; the aerodynamic resistance and rolling friction forces are negative, which are estimated based on reference coefficients and the value deriving from the weight sensor 17.

In the event of motion on a slope, the slope sensor 18 contributes to determining a further force acting on the bicycle 1, due to gravity, which will be positive or negative according to whether the movement is downhill or uphill, respectively.

Subsequently (step 409) the control unit determines a torque value Cs_{new} that must be supplied by the motor.

To calculate the torque value Cs_{new} reference is made to the aforesaid balance of forces so that the energy to be taken from the battery for obtaining that torque is effectively that stored in the battery.

Subsequently, the motor is controlled (step 406) to supply the torque Cs_{new}.

Finally, after the control of the motor, the logic L3 envisages verifying whether such logic must finish (step 410). In the positive case, e.g. because the control unit has selected another logic, then the control logic finishes (step 411), otherwise the process returns to step 402 and the control is repeated, thus allowing an adaptation control of the torque supplied by the electric motor.

The logic L4 is a battery charging logic. When the control unit 19 selects this logic, it activates the actuator A4, which switches the motor to an electric generator that charges the battery 13.

As explained above, the control unit 19 determines, as a function of the input data received, the weights to be assigned to each control logic L1, L2, L3. For example, if when the battery is completely charged the biker sets cruise control, but not a destination, then the control unit assigns a high weight to the logic L1 (e.g. 0.9 in a scale from 0 to 1), a very low weight to the logic L3 (e.g. 0.01 in a scale from 0 to 1), and a low one to the logic L2 (e.g. 0.04).

If the bicycle starts on a very steep uphill slope and the battery is still very fully charged, the weights assigned to the three logics change. For example, the weight assigned to the logic L3 increases as the torque sensor 15 and the slope sensor 18 determine the fatigue of the biker, while the battery signals 13 indicate excessive draining of the battery. Therefore, in these conditions, the weight assigned to the logic L3 can increase and exceed that assigned to the logics L1 and L2. Therefore, in these conditions, the electric bicycle 1 automatically changes the mode of controlling the motor and passes from logic L1 to logic L3.

Again, if on a flat stretch the biker suddenly increases the torque exercised on the crank arms, e.g. for a spurt, then the control unit 19 reassigns the weights to the three logics so that the logic L2 can become predominant with respect to L1 and L2.

Likewise, if the biker tackles a downhill stretch, the control unit 19 will assign very low weights to the logics L1, L2 and L3, while it will assign a very high one to the logic L4. Consequently, the control unit will select the charging logic L4 and will activate the actuator A4 for switching the electric motor 12 into electric generator mode and charging the battery 13.

The assigning of the weights to the control logics is performed using a fuzzy logic.

From the description of a preferred embodiment provided above, it is clear how the invention enables the predefined aims to be reached. The electric bicycle described above enables the pedal assistance to be adapted dynamically, considering the data received from the on-board sensors and the controls or data received from the biker through the user control system.

However, it is clear that the examples provided above are not to be interpreted in a limiting sense and the invention as conceived is subject to numerous modifications and variants all falling within the scope of the present invention according to the appended claims.

## Claims

1. Electric bicycle (1), comprising
an electric motor (12) connected to a wheel (3, 4) of the bicycle,
a battery (13) electrically connected to the electric motor to supply electric energy to the electric motor,
a plurality of sensors (100) adapted to detect operating parameters of the bicycle (1),
a user control system (200) adapted to allow a biker to provide information necessary to control the electric motor (12),
and a control unit (19) operatively connected to the electric motor (12), to the plurality of sensors (100) and to the user control system (200) to control the electric power of the electric motor (12) in response to signals received from at least one sensor of said plurality of sensors (100) and from the user control system (200),
wherein
the control unit (19) comprises a memory unit wherein a plurality of control logics (L1, L2, L3, L4) for controlling the electric motor (12) are stored,
and wherein
the control unit (19) is configured to
- assign a weight to each control logic of said plurality of control logics (L1, L2, L3, L4) according to data received from the plurality of sensors (100) and/or from the user control system (200),
- update the control logic weights based on updated data received from the sensors (100) and/or the user control system (200), and
- dynamically select the control logic with the highest weight,
- control the electric motor (12) according to the selected control logic;
**characterized in that** the control unit (19) assigns the weights to said plurality of control logics according to a fuzzy logic.

2. Electric bicycle according to claim 1, wherein each logic of said plurality of control logics depends on at least one different data coming from a different sensor of the bicycle.

3. Electric bicycle according to claim 1 or 2, wherein a sensor of said plurality of sensors is a speed sensor (14), wherein said user control system (200) is adapted to allow a user to enter a target speed value, and wherein a control logic of said plurality of control logics provides for:
- comparing an instantaneous speed value, received from the speed sensor (14), with said target speed value,
- increasing the driving torque supplied by the motor if the instantaneous speed value is lower than the target speed value and reduce the driving torque if the instantaneous speed value is higher than the target speed value.

4. Electric bicycle according to any of the previous claims, wherein said electric bicycle includes a torque sensor suitable for measuring a torque generated by the biker, and wherein a control logic of said plurality of control logics provides for controlling the electric motor in such a way that the torque generated by the motor is proportional to a torque measured by the torque sensor, and to limit the operation of the electric motor if the speed of the bicycle exceeds a preset threshold value.

5. Electric bicycle according to any of the previous claims, wherein
said user control system (200) is adapted to receive an input from the biker related to a destination to be reached, and is adapted to provide the control unit (19) data of a route to reach the destination indicated by the user, and wherein
the control unit (19) is adapted to implement a control logic that provides for:
a) checking (402) the state of charge of the battery to determine the amount of residual electrical energy stored in the battery,
b) estimating (407, 408) the energy consumption required to reach the destination indicated by the user based on the route data and a weight value of the biker,
c) determining (408) an energy value to be used during the route,
d) controlling (408,409) the electric motor so that it delivers a torque along the route such to consume the value of calculated energy to be used.

6. Electric bicycle according to claim 5, wherein the energy value to be used during the route corresponds to the residual energy in the battery.

7. Electric bicycle according to claim 5 or 6, wherein the control unit is configured to deliver a higher torque at uphill sections of the route.

8. Electric bicycle according to any of the previous claims, further comprising a weight sensor (17) to measure a weight acting on a bicycle seat, and wherein the control unit (19) is configured to estimate the energy consumption required to ride a route based on the weight measured by the weight sensor.

9. Electric bicycle according to any of the previous claims, wherein the motor (12) is included or integrated in the wheel hub.

## Patentansprüche

1. Elektrisches Fahrrad (1), umfassend:
einen Elektromotor (12), der mit einem Rad (3, 4) des Fahrrads verbunden ist;
eine Batterie (13), die elektrisch mit dem Elektromotor verbunden ist, um den Elektromotor mit elektrischer Energie zu versorgen;
eine Vielzahl von Sensoren (100), die dazu ausgelegt sind, Betriebsparameter des Fahrrads (1) zu erfassen;
ein Benutzersteuerungssystem (200), das dafür ausgelegt ist, um zu veranlassen, dass ein Radfahrer die zur Steuerung des Elektromotors (12) erforderlichen Informationen bereitstellt;
und eine Steuereinheit (19), die mit dem Elektromotor (12), der Vielzahl von Sensoren (100) und dem Benutzersteuerungssystem (200) wirkverbunden ist, um die elektrische Leistung des Elektromotors (12) in Reaktion auf Signale zu steuern, die von mindestens einem Sensor der Vielzahl von Sensoren (100) und von dem Benutzersteuerungssystem (200) empfangen werden,
wobei
die Steuereinheit (19) eine Speichereinheit umfasst, wobei eine Vielzahl von Steuerlogiken (L1, L2, L3, L4) zur Steuerung des Elektromotors (12) gespeichert sind,
und wobei
die Steuereinheit (19) eingerichtet ist zum
- Zuordnen eines Gewichts zu jeder Steuerlogik der Vielzahl von Steuerlogiken (L1, L2, L3, L4) gemäß Daten, die von der Vielzahl von Sensoren (100) und oder von dem Benutzersteuerungssystem (200) empfangen werden;
- Aktualisieren der Gewichte der Steuerlogik basierend auf aktualisierten Daten, die von den Sensoren (100) und/oder dem Benutzersteuerungssystem (200) empfangen werden; und
- dynamisches Auswählen der Steuerlogik mit dem höchsten Gewicht;
- Steuern des Elektromotors (12) entsprechend der gewählten Steuerlogik;
**dadurch gekennzeichnet, dass** die Steuereinheit (19) die Gewichte der genannten Vielzahl von Steuerlogiken gemäß einer Fuzzy-Logik zuordnet.

2. Elektrisches Fahrrad nach Anspruch 1, wobei jede Logik der Vielzahl von Steuerlogiken von mindestens einem unterschiedlichen Datenwert abhängt, der von einem unterschiedlichen Sensor des Fahrrads stammt.

3. Elektrisches Fahrrad nach Anspruch 1 oder 2, wobei ein Sensor der Vielzahl von Sensoren ein Geschwindigkeitssensor (14) ist, wobei das Benutzersteuerungssystem (200) dazu ausgelegt ist, zu veranlassen, dass ein Benutzer einen Zielgeschwindigkeitswert eingibt, und wobei eine Steuerlogik der Vielzahl von Steuerlogiken Folgendes vorsieht:
- Vergleichen eines vom Geschwindigkeitssensor (14) empfangenen momentanen Geschwindigkeitswertes mit dem genannten Zielgeschwindigkeitswert;
- Erhöhen des vom Motor gelieferten Antriebsdrehmoments, wenn der momentane Geschwindigkeitswert niedriger als der Zielgeschwindigkeitswert ist, und Reduzieren des Antriebsdrehmoments, wenn der momentane Geschwindigkeitswert höher als der Zielgeschwindigkeitswert ist.

4. Elektrisches Fahrrad nach einem der vorhergehenden Ansprüche, wobei das genannte elektrische Fahrrad einen Drehmomentsensor aufweist, der dazu ausgelegt ist, ein von dem Radfahrer erzeugtes Drehmoment zu messen, und wobei eine Steuerlogik der genannten Vielzahl von Steuerlogiken bewirkt, dass der Elektromotor derart gesteuert wird, dass das von dem Motor erzeugte Drehmoment proportional zu einem von dem Drehmomentsensor gemessenen Drehmoment ist, und dass der Betrieb des Elektromotors begrenzt wird, wenn die Geschwindigkeit des Fahrrads einen vorgegebenen Schwellenwert überschreitet.

5. Elektrisches Fahrrad nach einem der vorhergehenden Ansprüche, wobei
das genannte Benutzersteuerungssystem (200) dazu ausgelegt ist, eine Eingabe von dem Radfahrer zu empfangen, die sich auf einen zu erreichenden Zielort bezieht, und dazu ausgelegt ist, der Steuereinheit (19) die Routendaten, um den von dem Benutzer angegebenen Zielort zu erreichen, bereitzustellen, und wobei
die Steuereinheit (19) dazu ausgelegt ist, eine Steuerlogik durchzuführen, die Folgendes vorsieht:
a) Überprüfen (402) des Ladezustands der Batterie, um die Menge der in der Batterie gespeicherten elektrischen Restenergie zu bestimmen;
b) Schätzen (407, 408) des Energieverbrauchs, der erforderlich ist, um den vom Benutzer angegebenen Zielort zu erreichen, basierend auf den Routendaten und einem Gewichtswert des Radfahrers;
c) Bestimmen (408) eines Energiewertes, der während der Route zu verwenden ist;
d) Steuern (408, 409) des Elektromotors, so dass er ein Drehmoment entlang der Route abgibt, das den Wert der berechneten zu verbrauchenden Energie verbraucht.

6. Elektrisches Fahrrad nach Anspruch 5, wobei der auf der Route zu verbrauchende Energiewert der Restenergie in der Batterie entspricht.

7. Elektrisches Fahrrad nach Anspruch 5 oder 6, wobei die Steuereinheit dazu eingerichtet ist, auf bergauf führenden Routenabschnitten ein höheres Drehmoment zu liefern.

8. Elektrisches Fahrrad nach einem der vorhergehenden Ansprüche, ferner umfassend einen Gewichtssensor (17) zum Messen eines auf einen Fahrradsitz wirkenden Gewichts, und wobei die Steuereinheit (19) dazu eingerichtet ist, den zum Fahren einer Route erforderlichen Energieverbrauch basierend auf dem von dem Gewichtssensor gemessenen Gewicht zu schätzen.

9. Elektrisches Fahrrad nach einem der vorhergehenden Ansprüche, wobei der Motor (12) in der Radnabe enthalten oder integriert ist.

## Revendications

1. - Bicyclette électrique (1), comprenant :
un moteur électrique (12) relié à une roue (3, 4) de la bicyclette,
une batterie (13) reliée électriquement au moteur électrique pour fournir de l'énergie électrique au moteur électrique,
une pluralité de capteurs (100) agencés pour détecter des paramètres de fonctionnement de la bicyclette (1),
un système de commande utilisateur (200) agencé pour permettre à un cycliste de fournir des informations nécessaires pour commander le moteur électrique (12), et
une unité de commande (19) reliée de manière fonctionnelle au moteur électrique (12), à la pluralité de capteurs (100) et au système de commande utilisateur (200) pour commander la puissance électrique du moteur électrique (12) en réponse à des signaux reçus en provenance d'au moins un capteur de ladite pluralité de capteurs (100) et en provenance du système de commande utilisateur (200),
l'unité de commande (19) comprenant une unité de mémoire dans laquelle sont stockées une pluralité de logiques de commande (L1, L2, L3, L4) pour commander le moteur électrique (12), et
l'unité de commande (19) étant configurée pour
- attribuer un poids à chaque logique de commande de ladite pluralité de logiques de commande (L1, L2, L3, L4) en fonction de données reçues en provenance de la pluralité de capteurs (100) et/ou en provenance du système de commande utilisateur (200),
- mettre à jour les poids de logique de commande sur la base de données mises à jour reçues en provenance des capteurs (100) et/ou du système de commande utilisateur (200),
- sélectionner dynamiquement la logique de commande ayant le poids le plus élevé,
- commander le moteur électrique (12) en fonction de la logique de commande sélectionnée,
**caractérisée par le fait que** l'unité de commande (19) attribue les poids à ladite pluralité de logiques de commande selon une logique floue.

2. - Bicyclette électrique selon la revendication 1, dans laquelle chaque logique de ladite pluralité de logiques de commande dépend d'au moins une donnée différente provenant d'un capteur différent de la bicyclette.

3. - Bicyclette électrique selon la revendication 1 ou 2, dans laquelle un capteur de ladite pluralité de capteurs est un capteur de vitesse (14), ledit système de commande utilisateur (200) étant agencé pour permettre à un utilisateur d'entrer une valeur de vitesse cible, et une logique de commande de ladite pluralité de logiques de commande permettant de :
- comparer une valeur de vitesse instantanée, reçue en provenance du capteur de vitesse (14), à ladite valeur de vitesse cible,
- augmenter le couple d'entraînement fourni par le moteur si la valeur de vitesse instantanée est inférieure à la valeur de vitesse cible et réduire le couple d'entraînement si la valeur de vitesse instantanée est supérieure à la valeur de vitesse cible.

4. - Bicyclette électrique selon l'une quelconque des revendications précédentes, ladite bicyclette électrique comprenant un capteur de couple apte à mesurer un couple généré par le cycliste, et une logique de commande de ladite pluralité de logiques de commande permettant de commander le moteur électrique de telle sorte que le couple généré par le moteur est proportionnel à un couple mesuré par le capteur de couple, et de limiter le fonctionnement du moteur électrique si la vitesse de la bicyclette dépasse une valeur de seuil prédéfinie.

5. - Bicyclette électrique selon l'une quelconque des revendications précédentes, dans laquelle
ledit système de commande utilisateur (200) est agencé pour recevoir une entrée provenant du cycliste relative à une destination à atteindre, et est agencé pour fournir à l'unité de commande (19) des données d'un itinéraire pour atteindre la destination indiquée par l'utilisateur, et
l'unité de commande (19) est agencée pour mettre en oeuvre une logique de commande qui permet de :
a) vérifier (402) l'état de charge de la batterie pour déterminer la quantité d'énergie électrique résiduelle stockée dans la batterie,
b) estimer (407, 408) la consommation d'énergie nécessaire pour atteindre la destination indiquée par l'utilisateur sur la base des données d'itinéraire et d'une valeur de poids du cycliste,
c) déterminer (408) une valeur d'énergie à utiliser pendant l'itinéraire, et
d) commander (408,409) le moteur électrique de telle sorte qu'il délivre un couple le long de l'itinéraire de façon à consommer la valeur d'énergie à utiliser calculée.

6. - Bicyclette électrique selon la revendication 5, dans laquelle la valeur d'énergie à utiliser pendant l'itinéraire correspond à l'énergie résiduelle dans la batterie.

7. - Bicyclette électrique selon la revendication 5 ou 6, dans laquelle l'unité de commande est configurée pour délivrer un couple plus élevé dans des tronçons en montée de l'itinéraire.

8. - Bicyclette électrique selon l'une quelconque des revendications précédentes, comprenant en outre un capteur de poids (17) pour mesurer un poids agissant sur une selle de bicyclette, et l'unité de commande (19) étant configurée pour estimer la consommation d'énergie nécessaire pour parcourir un itinéraire sur la base du poids mesuré par le capteur de poids.

9. - Bicyclette électrique selon l'une quelconque des revendications précédentes, dans laquelle le moteur (12) est inclus ou intégré dans le moyeu de roue.
